# EUROPEAN PATENT APPLICATION

(11) **EP 1 785 032 A2**
(43) Date of publication of application: **16.05.2007**
(21) Application number: 05077557.6
(22) Date of filing: 09.11.2005
(51) Int. Cl.: A01M 7/00, A01M 9/00, B05B 15/04

(54) **Spraying apparatus**

(30) Priority: 09.11.2005 NZ 53643605
(71) Applicant: Tahau, Frederick Wareahuru, Katikati (NZ); Hayward, Philip Stephen Lewis, Katikati (NZ)
(72) Inventor: Tahau, Frederick Wareahuru, Katikati (NZ); Hayward, Philip Stephen Lewis, Katikati (NZ)
(74) Representative: Bridle, Andrew Barry

(57) **Abstract**

The invention consists in a spraying apparatus for mechanised spraying from a vehicle and comprises a supply means for providing a sprayable material, air supply means, and spray means. The supply means is adapted to provide pressurised flow. The air supply is operatively connected to the spray means and the supply means is operatively connected to the spray means such that the sprayable material is sprayed from the spray means in conjunction with air from the air supply means. The apparatus is adapted to be removably connected to any vehicle. Also the invention can also include a spray boom apparatus for mechanised application of a pressurised spray. The spray boom apparatus includes a non-air spray boom for spraying pressurised non-air material and an air spray boom for spraying pressurised air The air assists the non-air spray to hit specified targets by increasing spray areas and depth.

## Description

### Field of Invention

The invention relates to a spraying apparatus and/or spray boom. The invention is directed particularly, but not solely, towards a mechanised pollinating apparatus for a vehicle.

### Background of the Invention

Normally pollinating flowers is a natural process. However, it has been found that human intervention can be used to increase the fertilisation success rate such that more fruit can be set, and grown which can also mean greater fruit size as well as greater yield, can be achieved. The natural process is not that efficient.

With more fruit being fertilised, profitability of any orchard or business operations can be significantly increased.

At present human intervention comprises gathering or collecting pollen and applying to a flower to enable fertilisation to deliberately occur. This is carried out using a common sprayer such as a hand-heid or back pack apparatus.

Different types of pollination also present different problems in achieving fertilisation. Some examples are animal or wind pollinating flowers. The sprayer is used to spray pollen to where it is directly needed. The sprayer can also be a dry applicator or not.

There are other ways of assisting in the application of pollen. Pollen can be supplied under pressure using a pump and compressor unit system. Additionally this particular system can be mounted on a tractor or vehicle with several hand held applicators. However this system is labour intensive and is not very mobile or adaptable to different physical locations.

Other systems for applying pollen comprise dry pollen applicators, which is done using a garden held blower with a venturi type metering system to introduce pollen to the air stream, which is then aimed at the flowers. The problem with existing dry pollen applicators is that increasing the air pressure too much tends to kill the pollen being sprayed and may damage the flowers.

In yet another method of pollination there is the roll-on system. This system uses pollen impregnated velvet socks which are sleeved over a small hand-held paint brush type holder, which is then used to roll the pollen directly onto the flowers.

All of these systems are extremely labour intensive and time consuming.

### Object of the Invention

It is the object of the invention to provide an improved spraying apparatus which at least ameliorates some of the aforementioned problems and/or at least provides the public with a useful choice.

### Statement of the Invention

Accordingly, in a first aspect the invention consists in a spraying apparatus for mechanised spraying from a vehicle comprising a supply means for providing a sprayable material, air supply means, and spray means, the supply means being adapted to provide pressurised spray flow, the air supply being operatively connected to the spray means and the supply means being operatively connected to the spray means such that the sprayable material is sprayed from the spray means in conjunction with air from the air supply means wherein the apparatus is adapted to be removably connected to a vehicle.

Preferably the sprayable material includes pollen which is in the form of a suspension.

Preferably the air supply means includes a blower to produce pressurised air to assist in directing the sprayable material to where it is needed.

Preferably the air supply means includes an air curtain boom wherein the air curtain boom has a structure that allows the air to exit therefrom.

Preferably the air curtain boom can include at least one adjustable air bar wherein the air bar is apertured to allow the air to exit therefrom.

Preferably the air supply means is operatively connected from the blower via tubing to the air bar.

Preferably the spray means includes a spray boom wherein the spray boom includes at least one spray bar with at least one nozzle to allow the spray which is in the form of a suspension or liquid to exit therefrom.

Preferably the spray supply means is operatively connected to the spray boom.

Preferably the spray supply means is a tank.

Preferably the air curtain boom is supported by the spray boom.

Alternatively the air curtain is separately supported by its own support structure.

Preferably support means supports the air bar and or the spray bar and the support means is a stem adapted to allow spray therethrough.

Preferably the support means and/or spray bar and or air bar are adjustable to enable rotation and/or tilting and height adjustment.

Preferably a compressor is operatively connected to the tank to pressurise the pollen exiting therefrom.

Preferably the apparatus includes a guard rail being connectable to the stem or spray bar or air bar to protect the air bar and spray bar, pressure switching, solenoid control switching and liquid control solenoids to assist in the movement of the pollen in the tank to the spray boom and air curtain boom.

Preferably the apparatus includes a guard rail to protect the air bar and spray bar, pressure switching, solenoid control switching and liquid control solenoids to assist in the movement of the pollen in the tank to the spray boom and air curtain boom.

Accordingly, in a second aspect the invention consists in a spray boom apparatus for non-hand application of a pressurised spray, the apparatus including a non-air spray boom for spraying pressurised non-air material and an air spray boom for spraying pressurised air, wherein the air assists the non-air spray to hit specified targets by increasing spray areas and depth.

Preferably the boom is able to be adjustably orientated and to be constructed and adapted to be connected to and supported by a vehicle.

Preferably the spray boom includes at least one spray bar.

Preferably the spray bar has at least one aperture to allow a liquid spray to exit therefrom.

Preferably an air supply means is adapted to provide pressurised air to the air spray boom wherein the air supply means is provided adjacent or close enough to be effective, to the spray bar whereby air can be delivered to the air spray boom to assist in the directional effectiveness of the spray, exiting the spray bar.

Preferably the air supply means comprises a separate boom being provided by at least one air bar having at least one aperture to allow air to exit therefrom.

Preferably the air bar in use is located parallel and behind the spray bar.

Preferably support means supports the air bar.

Preferably support means supports the spray bar.

Preferably the support means and/or spray bar and/or air bar are adjustable to enable rotation and/or tilting and height adjustment.

Preferably the apparatus includes a tank for the storage of the spray and a guard rail joined to the bars to protect them from damage or entanglement with any obstacles.

Preferably the apparatus includes a compressor being operatively connected to the tank to allow the spray to be pressurised.

Preferably the air supply means includes a blower which can be operatively connected to the air boom to produce pressurised air which is sited behind the spray boom to the enable the pressurised spray to be directed to the area or plant requiring spraying.

### Brief Description of Drawings

Embodiments of the invention will now be described by way of example only, with reference to the accompanying drawings of which:
1. Figure 1 is a schematic top plan view of the spraying apparatus.
2. Figure 2 is a schematic front view of the spraying apparatus of figure 1.
3. Figure 3 is a schematic rear view of the spraying apparatus of figure 1.
4. Figure 4 is a schematic perspective view of another version of the supply means.
5. Figure 5 is a schematic perspective view of a boom guard rail for the apparatus.

### Description of the Invention

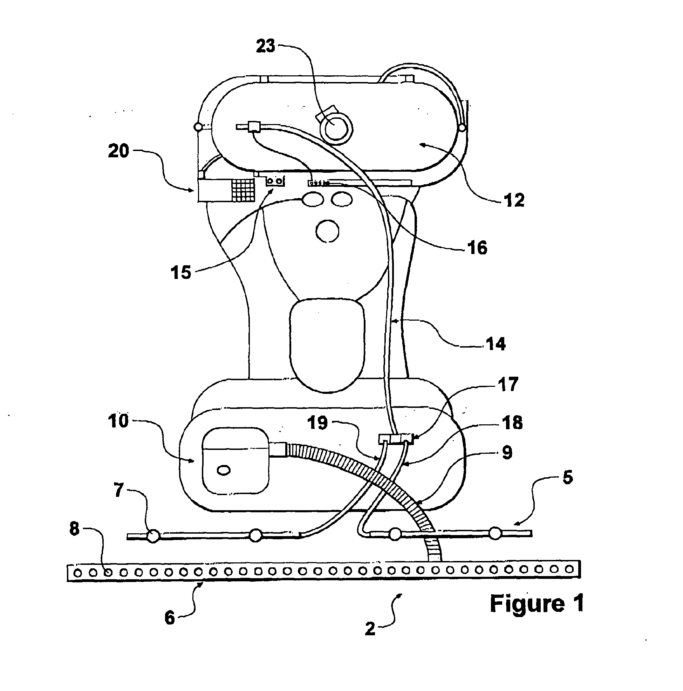

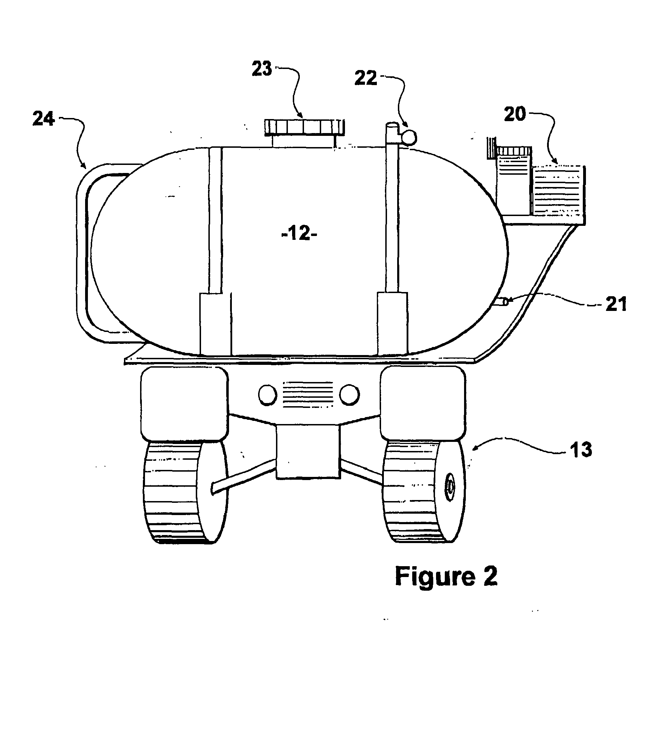

As shown in figures 1 to 5, a spraying apparatus 1 is adaptively constructed to fit on a vehicle for mechanised spraying. For example, the vehicle can be a truck, bike, van, motorbike or quad bike which can be used for spraying pollen or any other sprayable material which can be a suspension or be in a mainly liquid form.

Spraying apparatus 1 includes a boom structure 2 having a shape, structure and size that suits the area or crop or plant or vehicle that is to be sprayed. For example, the boom structure 2 can be shaped as a T-shaped structure or L-shaped or circular or fan shaped structure. For a T-shaped structure there can be a stem portion 3 and bar portion 4. Stem portion 3 is adapted to both support the boom structure and provide a conduit for a pressurised spray (pollen and/or air).

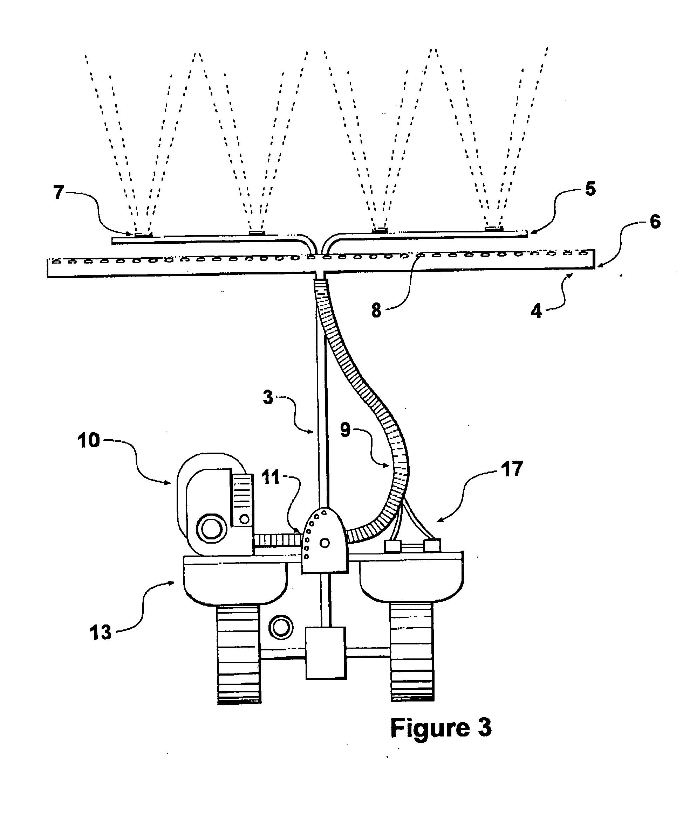

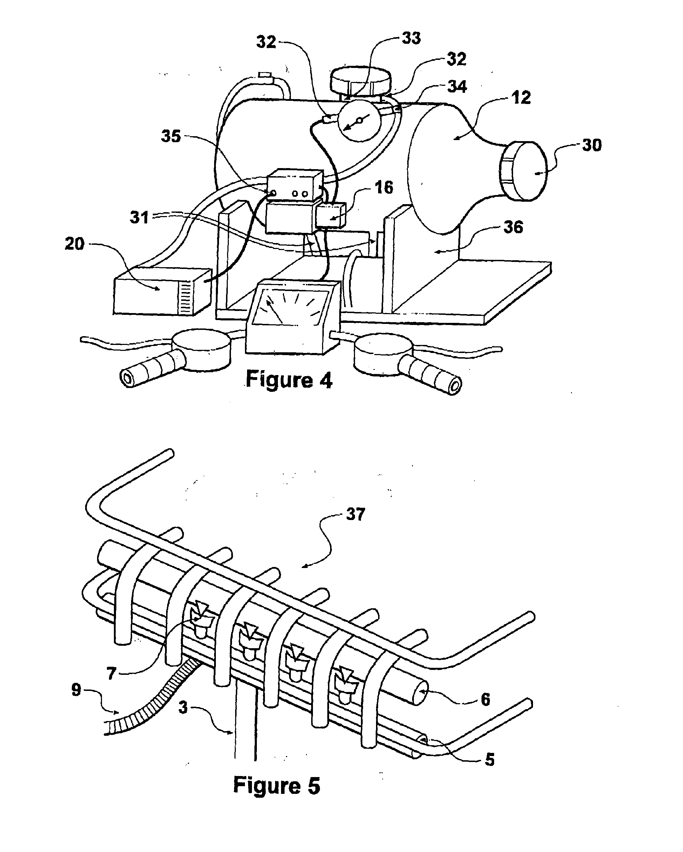

Bar portion 4 includes spray bar means 5 and air bar means 6 which can include at least one bar each or a single bar having separate feeds. Spray bar 5 can include at least one bar having at least one aperture having at least one nozzle 7. These nozzles 7 are shown in figures 3 and 5. There can also be at least one or a plurality of apertures/nozzles or several bars depending on the spray coverage desired or the chemical/material being sprayed, etc. Though figure 3 appears to show the air bar below the spray bar, different orientations of these are possible - such as shown in figure 5 where the spray bar which can be stainless steel of say 20mm diameter is shown below and ahead of the air bar 6 which can be 40mm diameter plastics pipe as shown. During driving or moving of the vehicle or spraying apparatus, the forward spray from nozzles 7 is bent upwardly as a spray cone ahead of the air which come out behind to significantly increase the spray cone area and depth of coverage to significantly increase flower hits or pollination. The air which is also separately pressurized pushes the spray to much greater areas of coverage without damaging the pollen being sprayed. The nozzle and spray bar and air bar can be adjustably located to allow for many different combinations of materials being used, location and items being sprayed.

Air bar 6 includes at least one bar having at least one aperture 8, though it is likely a plurality of apertures 8 will be required. Air bar 6 can be termed an air curtain boom. Air bar 6 can include a feeding portion 9. Feeding portion 9 can comprise a tubular structure connected to a blower 10.

Both bars 5 and 6 can be adjustably connected to each other and can be located telescopically and rotatably within each other if desired. For example, as shown in figure 3 the stem 3 can be adjustably connected such that both height and angle can be adjusted. Other variations of this adjustment can include a means to allow an extension of the stem, eg by telescoping portions or pivoting portions which can be locked such that an angle can be attained for different applications. Rotation can be via the vehicle or remotely done to enable vertical and horizontal rotations and/or tilting and height adjustment.

Stem 3 is operatively connected to a supply means 12. Supply means 12 can include a tank which is sized to fit a vehicle 13 and/or use required, for example the size of the field or crop to be sprayed or type of pollen or volume required.

As shown in figure 1, tank 12 is connected via a conduit 14 which can be operatively activated by a solenoid control switch 15 and pressure switch 16. Conduit 14 can be for example a hose, which in turn in use is connected to a liquid control solenoid 17 which in turn can have any suitable branching 18 and 19 to the spray bar 4.

Tank 12 can also be operatively connected to a compressor 20 to pressurise the sprayable material, which for example can be pollen, by adding compressed air to tank 12 so that the pollen can be in the form of a suspension.

Tank 12 can also have a drain tap 21, a pressure gauge 22, access means 23 and level indicator 24 as required or as necessary. Spraying apparatus 1 can be adapted depending on the vehicle being used to support the apparatus. The apparatus is particularly suited to the mechanised spraying of pollen. Any type of chemical can be sprayed. For example this can include pollen in a suspension or a herbicide, other agri-chemicals, or even water.

In use the spray boom 5 is located in use ahead of the air boom or bar 6 (ie. closer to the material or area being sprayed) such that the blower 10 forces pressurised air through air bar 6, which in turn exists to push the spray which is also exiting the spray bar. As shown in this example the apparatus has the spray supply means separately located at the rear of the vehicle and the spray means at the front of the vehicle. This orientation and separation can be varied to suit the vehicle.

This apparatus is particularly well suited to low pressure kiwifruit pollen and in general is able to achieve increased dry matter production. The suspension can consist of kiwifruit male pollen, deionised water plus pollenaid suspension medium. In use the application is carried out whereby there is the spray boom attached to an air boom supplying a curtain of pressurised air which is used to assist the mobile application approximately 5 kilometres per hour.

In this example spray boom 2 can include a spray boom 6 having four nozzles 7 parallel to the air curtain 6, giving 2.2 metres coverage. In this example as well, the boom 2 can be made adjustable through 90 degrees. The spray pressure can be, for example, 15-30 psi maximum supplied by a 12 volt compressor with a pressure regulator. The spraying apparatus is especially suited to small or confined area, such as a greenhouse.

In another version of the spraying apparatus figures 4 and 5 show other optional tank features including a 150mm diameter inspection port 30, dual liquid outlets 31, all pressure connection 32 on filler neck 33, extra pressure release tap 34 and an extra power isolation switch 35 which is part of the control means which is located on top of a mounting box (not labelled), which allows simple disassembly of the tank for cleaning and electrical isolation with simple on and off switching. The tank can be shaped like a 'milk tank' and can be located and supported by a cradle-type system 36 which can also include a pedestal portion. Also shown in figure 5 is a boom guard rail 37 which allows the boom or air and spray bars to not be damaged during spraying, nor damage any trees being sprayed. Rail 37 can be removably connected to the support or air bar or spray bar.

Tank 12 can be, for example, a stainless steel spray tank though other materials are equally possible such as plastics or steel. Compressor 20 which is designed to produce compressed air to tank 12 containing the pollen in a suspension may be replaced or combined with a pump if pollen or any 'non-clogging' material is being used. The non-clogging material can be any 'sprayable' material, such as agrichemicals. In another option a dive bottle with a regulator may be used instead of the compressor or in combination.

To those skilled in the art to which the invention relates, many changes in construction and widely differing embodiments and applications of the invention will suggest themselves without departing from the scope of the invention as defined in the appended claims. The disclosures and the description herein are purely illustrative and are not intended to be in any sense limiting.

Throughout the description and claims of this specification the word "comprise" and variations of that word, such as "comprises" and "comprising", are not intended to exclude other additives, components, integers or steps.

The spraying apparatus or boom can have at least some of the following advantages:
1. Simple operation.
2. Mechanised operation.
3. Effective spray coverage possible.
4. Modest manufacturing costs.
5. Efficient use of chemicals or spray.
6. Reduced cost for sprays.
7. Increased pollination and fruit yield.
8. Adaptable apparatus to a variety of crops.
9. Rapid spray times achievable.
10. Useful for a variety of vehicles or chemicals.
11. Increased dry matter productions.
12. Low volume and low pressure system good for small areas, eg. greenhouses.

## Claims

1. A spraying apparatus for mechanised spraying from a vehicle comprising a supply means for providing a sprayable material, air supply means, and spray means, the supply means being adapted to provide pressurised flow; the air supply means being operatively connected to the spray means and the supply means being operatively connected to the spray means such that the sprayable material is sprayed from the spray means in conjunction with air from the air supply means wherein the apparatus is adapted to be removably connected to a vehicle.

2. The spraying apparatus as claimed in claim 1 wherein the sprayable material includes pollen which is in the form of a suspension.

3. The spraying apparatus as claimed in claim 2 wherein the air supply means includes a blower to produce pressurised air to assist in directing the sprayable material to where it is needed.

4. The spraying apparatus as claimed in claim 3 wherein the air supply means includes an air curtain boom wherein the air curtain boom has a structure that allows the air to exit therefrom.

5. The spraying apparatus as claimed in claim 4 wherein the air curtain boom can include at least one adjustable air bar wherein the air bar is apertured to allow the air to exit therefrom.

6. The spraying apparatus as claimed in claim 5 wherein the air supply means is operatively connected from the blower via tubing to the air bar.

7. The spraying apparatus as claimed in claim 6 wherein the spray means includes a spray boom and the spray boom includes at least one spray bar with at least one nozzle to allow a liquid spray to exit therefrom.

8. The spraying apparatus as claimed in claim 7 wherein the spray supply means is operatively connected to the spray boom.

9. The spraying apparatus as claimed in claim 8 wherein the spray supply means is a tank.

10. The spraying apparatus as claimed in claim 9 wherein the air curtain boom is supported by the spray boom.

11. The spraying apparatus as claimed in claim 9 wherein the air curtain boom is separately supported by its own support structure.

12. The spraying apparatus as claimed in claim 10 or 11 wherein support means supports the air bar and/or the spray bar and the support means is a stem adapted to allow spray and/or air therethrough.

13. The spraying apparatus as claimed in claim 12 wherein the support means and/or spray bar and/or air bar are adjustable to enable rotation and/or tilting and height adjustment.

14. The spraying apparatus as claimed in claim 13 wherein a compressor is operatively connected to the tank to pressurise the pollen exiting therefrom.

15. The spraying apparatus as claimed in claim 14 wherein the apparatus includes a guard rail to protect the air bar and spray bar being connectable to the stem or spray bar or air bar, pressure switching, solenoid control switching and liquid control solenoids to assist in the movement of the pollen in the tank to the spray boom and air curtain boom.

16. A spray boom apparatus for mechanised application of a pressurised spray, the apparatus including a non-air spray boom for spraying pressurised non-air material and an air spray boom for spraying pressurised air, wherein the air assists the non-air spray to hit specified targets by increasing spray areas and depth.

17. A spray boom apparatus as claimed in claim 16 wherein the boom is able to be adjustably orientated and to be constructed and adapted to be connected to and supported by, a vehicle.

18. The spray boom apparatus as claimed in claim 17 wherein the spray boom includes at least one spray bar having at least one aperture to allow the spray which is a suspension to exit therefrom.

19. The spray boom apparatus as claimed in claim 18 wherein an air supply means is adapted to provide pressurised air and the air is provided adjacent to the spray bar whereby air can be delivered to assist in the directional effectiveness of the spray or spray hits, exiting the spray bar.

20. The spray boom apparatus as claimed in claim 19 wherein the air supply means comprises a separate boom being provided by at least one air bar having at least one aperture to allow air to exit therefrom.

21. The spray boom apparatus as claimed in claim 20 wherein in use the air bar is located parallel and behind the spray bar.

22. The spray boom apparatus as claimed in claim 21 wherein support means supports the air bar.

23. The spray boom apparatus as claimed in claim 21 wherein support means supports the spray bar.

24. The spray boom apparatus as claimed in claim 21 or 22 wherein the support means and or spray bar and/or air bar are adjustable to enable rotation and/or tilting and height adjustment.

25. The spray boom apparatus as claimed in claim 24 wherein the apparatus includes a tank for the storage of the spray and a guard rail joined to the bars to protect them from damage or entanglement with any obstacles.

26. The spray boom apparatus as claimed in claim 25 wherein the apparatus includes a compressor being operatively connected to the tank to allow the spray to be pressurised.

27. The spray boom apparatus as claimed in claim 26 wherein the air supply means includes a blower which can be operatively connected to the air boom to produce pressurised air which is in use sited behind the spray boom to the enable the pressurised spray to be directed to the area or plant requiring spraying.
